# EUROPÄISCHE PATENTANMELDUNG

(11) **EP 2 211 079 A1**
(43) Veröffentlichungstag der Anmeldung: **28.07.2010**
(21) Anmeldenummer: 09000934.1
(22) Anmeldetag: 23.01.2009
(51) Int. Cl.: F16L 3/13, F16L 3/227, F16L 3/24

(54) **Fixierungssystem für Leitungen und Fixierungsverfahren**

(71) Anmelder: AZ Pokorny S.R.O., 67173 Tulesice (CZ)
(72) Erfinder: Pokorny, Petr, 669 04 Znojmo (CZ)
(74) Vertreter: Thomas, Matthias

(57) **Zusammenfassung**

Die Erfindung betrifft ein Fixierungssystem für Leitungen und zugehörige Fixierungsverfahren, wobei ein Fixierungsbauteil (2) mit einem Führungsbauteil (1) verbunden und in diesem positioniert wird und das Fixierungsbauteil (2) eine Leitung (6) hält. Die Erfindung betrifft insbesondere auch die zur Herstellung der Fixierung geeigneten Fixierungsverfahren und die Verwendung der Fixierung bei Wärmetauschern.

## Beschreibung

Die Erfindung betrifft ein Fixierungssystem für Leitungen, das weitgehend universell einsetzbar ist und ein Fixierungsverfahren.

Es ist bekannt, Leitungen mit Rohrschellen oder Bügeln zu befestigen. Ebenso ist bekannt, zumindest einzelne Leitungen mit Bandagen an geeigneten Orten zu befestigen.

Sollen Leitungen mit Rohrschellen, Bügeln oder Bandagen befestigt werden, ist stets ein geeigneter Befestigungsort (Mauerwerk, Holzbalken, Konstruktionsteile) erforderlich. Sind Befestigungsorte nicht in der notwendigen Entfernung verfügbar, müssen Leitungen stabiler ausgelegt werden, als es technisch notwendig wäre.
Zudem muss, wenn mehrere Leitungen in etwa parallel verlaufend geführt werden, entweder eine Vielzahl von Rohrschellen gesetzt werden oder es sind Mehrfachrohrschellen in jeweils spezifischen Abmessungen notwendig. Die Herstellung solcher Art Rohrschellen ist aufwendig.
Besonders schwierig ist die Befestigung von Wellrohren oder -schläuchen wegen des bei diesen Leitungen vorhandenen Wellenprofils. Um solche Leitungen zu befestigen, werden entweder formschlüssig angepasste Halterungen, Schellen oder Bügel verwendet oder es wird eine zusätzliche Manschette um die Leitung gelegt. Solche Methoden zur Befestigung sind aufwendig.
Wenn Wellrohre oder -schläuche in Wärmetauschern oder Solaranlagen eingesetzt werden, muss zugleich die Dimensionsänderung bei unterschiedlichen Temperaturen berücksichtigt werden. Zudem werden große Leitungslängen benötigt, damit eine ausreichend große Austauschfläche für den Wärmeübergang erreicht wird. Solche Installationen können nicht mehr mit herkömmlichen Schellen oder Bügeln ausgeführt werden, da sie in technischer Hinsicht und kostenseitig zu aufwendig werden.
Nach einem Vorschlag in DD 247 965 A1 sollen Wellrohre deshalb u-förmig verlaufen, während sie mit ihren Anschlüssen jeweils mit dem Deckel eines Wärmetauschers fest verbunden werden. Diese Bauweise ist ausgesprochen aufwendig und aus energetischen Gesichtspunkten uneffektiv. Die feste Verbindung der Wellrohrenden mit dem Deckel schafft Wärmebrücken und bewirkt Wärmeverluste. Zur Erreichung einer ausreichend großen Oberfläche ist eine Vielzahl u-förmig gebogener Wellrohrabschnitte in den Wärmetauscher einzubringen und jeweils mit den Enden dicht zu befestigen. Hinzu kommt die Notwendigkeit, mit zusätzlichen Verteiler- bzw. Sammelleitungen für zu- bzw. abfließendes Medium zu arbeiten.
Ein weiterer Nachteil besteht darin, dass die Deckelfläche eines solchen Wärmetauschers die Anzahl der anschließbaren u-förmigen Leitungen begrenzt und deshalb keine optimale Auslegung eines solchen Wärmetauschers möglich ist.
Ein anderer Vorschlag in DE 39 28 558 A1 sieht vor, eine Anzahl weitgehend geradlinig verlaufender Wellrohrabschnitte zwischen einem oberen und einem unteren Klemmblock zu führen, wobei der Klemmblock aus Einzelsegmenten besteht, die entweder an das Profil der Wellrohre angeglichen werden oder mit zusätzlichen Formschluss gebenden Bauelementen versehen sind. Auch nach diesem Vorschlag ist es notwendig, die Ein- und Ausgänge der einzelnen Leitungsabschnitte durch Verbindungsleitungen oder -räume untereinander zu verbinden.
Für den Fall, dass einzelne oder eine begrenzte Anzahl von Leitungen entweder spiralförmig oder zylinderförmig gewickelt in einem Wärmetauscher eingebracht werden sollen, ist in DE 20 2007 009 023 U1 vorgeschlagen, die einzelnen Windungen der Leitung in einem mäanderförmig gebogenen Bauteil aus Draht zu fixieren und die so entstandene Baueinheit in den Wärmetauscher einzubringen.
Diese Art der Fixierung kann auch außerhalb von Wärmetauschern zur Fixierung von Leitungen dienen. Diese Fixierung hat Nachteile im Hinblick auf eine möglicherweise notwendig werdende Variation der Leitungsabstände, bei variierenden Durchmessern, bei thermischen Spannungen innerhalb der fixierten Leitungen und deren Aufhängung sowie bei großdimensionierten Leitungswickeln mit einer entsprechend großen Eigenmasse. Es besteht die Gefahr, dass sich die mäanderförmig gebogenen Halteeinrichtungen bleibend deformieren. Müssen die Leitungen mit eingeflochtenen Befestigungsteilen in den Mäandern zusätzlich fixiert werden, erhöht sich der Aufwand nochmals.

Es ist deshalb Aufgabe der Erfindung, ein Fixierungssystem für Leitungen vorzuschlagen, das leicht und einfach herstellbar ist, universellen Einsatz zur Fixierung einzelner wie auch einer Mehrzahl von Leitungen ermöglicht und sowohl bei herkömmlichen Leitungsinstallationen als auch zur Fixierung von Leitungswickeln eingesetzt werden kann. Es ist insbesondere Aufgabe der Erfindung, ein Fixierungssystem vorzuschlagen, das der Fixierung von Wellrohrleitungen und - schläuchen dienen kann und das thermische Belastungen in Wärmetauschern und Solaranlagen standhalten kann.

Die Aufgabe wird durch ein Fixierungssystem mit den Merkmalen des Patentanspruches 1, für das Verfahren zur Herstellung der Anordnung nach den Merkmalen des kennzeichnenden Teils des Patentanspruches 8 und für die Verwendung nach den Merkmalen des kennzeichnenden Teils des Patentanspruches 11 gelöst. Neben- und nachgeordnete Patentansprüche lösen Teilaufgaben oder beschreiben verbesserte oder bevorzugte Ausführungsformen der Erfindung.

Nachstehend werden in der Beschreibung verwendete Begriffe mit folgendem Bedeutungsinhalt verwendet Leitung bezeichnet jede Art langgestreckter Gegenstände mit einem bestimmbaren Querschnittsprofil.
Halteeinrichtung bezeichnet eine Anordnung, die eine oder mehrere Leitungen fixieren kann.
Führungsbauteil ist ein Bauteil, das ein anderes Bauteil durch Formschluss hält und in einem Freiheitsgrad eine Bewegung zulässt während es in allen weiteren Freiheitsgraden Bewegungen hemmt. Fixierungsbauteil ist ein Bauteil, das durch das Führungsbauteil geführt wird und der Aufnahme einer Leitung dient.

Nach der Erfindung wird ein Frxierungssystem für Leitungen vorgeschlagen, das in einem Führungsbauteil ein Fixierungsbauteil führt, wobei das Fixierungsbauteil in einer Ausnehmung eine Leitung aufnimmt und diese fixiert. Nach der Erfindung ist es insbesondere möglich, die Fixierungsbauteile im Führungsbauteil in einer Richtung zu bewegen, dadurch eine bestimmte Position zu erreichen und insbesondere auch einen Spannungs- oder Längenausgleich zu ermöglichen. Ein Führungsbauteil kann eine Mehrzahl von Fxierungsbauteilen aufnehmen.

Die zu fixierenden Leitungen sind Glattrohre, Wellrohre, Schläuche mit glattem oder gewelltem Profil oder auch Kabel.
Bevorzugt wird jedoch die Verwendung des Fixierungssystems bei Wellrohren oder -schläuchen, um diese entsprechend ihrer spezifischen Eigenschaften in verschiedenen Anwendungsformen fixieren zu können.
Erfindungsgemäß kann die Leitung eine Einzelleitung, eine Mehrzahl von Leitungen, ein spiralförmig, ein zylinderförmig verlaufender Wickel, ein Mehrfachwickel oder eine Kombination der vorgenannten Bauformen sein. Dabei ist es unerheblich, ob in einem Wickel eine oder mehrere Leitungen verlaufen und welche Richtung diese haben.

Das Führungsbauteil hat vorzugsweise die Form einer Schiene, die einen Querschnitt mit Formhinterschneidungen hat, der mit den jeweils formkompatiblen Elementen der Fixierungsbauteile korrespondiert. Das Profil des Führungsbauteils kann positiv sein, wie beispielsweise bei einem trapezförmigen Querschnitt, wobei das Fixierungsbauteil dann die entsprechende Negativform hat.
Ebenso kann das Führungsbauteil die Negativform haben. Beispielsweise ist eine Ausführungsform möglich, bei der das Führungsbauteil als Blechprofil mit c-förmigem Querschnitt ausgeführt ist, während die Fixierungsbauteile angeformte Laschen haben, die formhinterschneidend in das Profil eingreifen.
Das Führungsbauteil kann auch ein Stab sein, auf den das Fixierungsbauteil mit einer entsprechenden Ausnehmung aufgeschoben werden kann.
Die Aufgabe des Führungsbauteils kann auch ein materialeinheitlich ausgeformtes Profil eines beliebigen Basisbauteils übernehmen, wie beispielsweise eine Behälterinnenwand.
Ebenso ist es möglich, in ein Basisbauteil eine formhinterschneidende Nut einzubringen, in die dann die Fixierungsbauteile eingreifen.
Das Führungsbauteil kann auch Mittel zum Befestigen an einem Basisbauteil, an einem weiteren Führungsbauteil oder zum Aufhängen an nicht zum Fixierungssystem gehörenden Teilen haben.

Es ist möglich, in ein Führungsbauteil eine Mehrzahl Fixierungsbauteile ein- oder aufzuschieben, während die Leitung in etwa von der Mitte des Führungsbauteils beginnend bogenförmig von einem Fixierungsbauteil zu einem weiteren Fixierungsbauteil geführt wird, wobei sich eine ebene, spiralförmige Gesamtanordnung ergibt.
Es ist möglich, bei einer solchen Anordnung Führungsbauteile über Kreuz anzuordnen, wodurch die Zahl der Fixierungspunkte für die Leitung steigt.

Eine weitere Ausführungsform kann darin bestehen, dass die Leitung zu einem zylinderförmigem Wickel geformt ist, der mit Führungsbauteilen und Fixierungsbauteilen mehrfach festgelegt ist und auf diese Weise seine Form und Abmessungen behält.
Um die Form und Dimension der oben beschriebenen Anordnungen zu erhalten, können mehrere Führungsbauteile mit Fixierungsbauteilen angeordnet werden.
Eine bevorzugte Ausführungsform besteht darin, dass die sich gegenüber liegenden Führungsbauteile jeweils mit Verbindungsbauteilen gesichert werden.

Erfindungsgemäß ist das Fixierungsbauteil so ausgelegt, dass es in seiner Ausnehmung Leitungen mit einem bestimmten Durchmesserbereich aufnehmen und fixieren kann. Unterschiedliche Außendurchmesser oder abweichende Formen bei den Leitungen können durch bestimmte Größen, Sonderformen der Ausnehmung oder Beilagen aufgenommen und fixiert werden.
Das Fixierungsbauteil kann die Form eines Bügels, einer Schelle oder einer Klammer haben. Sofern es als Bügel oder Schelle ausgeführt ist, kann die fixierte Leitung nicht ohne weiteres wieder gelöst werden. Bei einer Ausführungsform als Klammer ist ein Lösen der Leitung jederzeit möglich.
Gegenüber dem Führungsbauteil besitzen die Fixierungsbauteile Elemente, die einen Formschluss zum Führungsbauteil gewährleisten.
Die Fixierungsbauteile können, soweit sie die jeweils geforderten Eigenschaften erfüllen, aus jedem Werkstoff hergestellt sein.

Sind die Führungsbauteile als lose Teile ausgeführt, können sie paarweise Rücken an Rücken angeordnet werden, wodurch in geringem Abstand zueinander Fixierungen verschiedener Leitungen oder Leitungswickel möglich sind.

Um im Bedarfsfall einen vorgegebenen Abstand zwischen einzelnen Leitungen einstellen zu können, werden in einer weiteren Ausführungsform zwischen die Fixierungsbauteile Distanzstücke eingefügt. Abhängig von der Ausführungsform der Führungsbauteile können dies streifenförmige Zuschnitte, Hülsen oder auch speziell geformte Teile sein. Ebenso ist es möglich, Elemente zur Einstellung der Abstände materialeinheitlich an den Fixierungsbauteiien vorzusehen.
Weiterhin können Fixierungsbauteile auch in doppelter oder Mehrfachausführung verwendet werden.

Das erfindungsgemäße Verfahren zur Erzeugung eines Fixierungssystems besteht darin, dass zunächst ein Führungsbauteil mit einer entsprechenden Anzahl Fixierungsbauteilen versehen wird, sodass eine eigenständige Baueinheit entsteht. In einem nachfolgenden Arbeitsschritt wird dann eine Leitung in die Fixierungsbauteile eingelegt.
Handelt es sich bei den Fixierungsbauteilen um Schellen, ist das Verfahren so ausgestaltet, dass zunächst auf der Leitung das Fixierungsbauteil angeordnet und die entstehende Baueinheit dann mit dem Führungsbauteil verbunden wird.

Handelt es sich bei den zu fixierenden Leitungen um einen ebenen oder zylinderförmigen Wickel, kann das Verfahren so ausgestaltet sein, dass in einem ersten Arbeitsschritt die Leitung zu dem entsprechenden Wickel geformt wird. Nachfolgend wird dann ein Führungsbauteil mit der notwendigen Zahl Fixierungsbauteile bestückt und die entstandene Baueinheit anschließend mit den einzelnen Leitungen des Wickels verbunden.
Eine Ausgestaltungsform dieses Verfahrens besteht darin, dass nachfolgend weitere Baueinheiten mit den Leitungen oder Leitungsteilen verbunden werden, wobei solche Anordnungen vorzugsweise paarweise sich gegenüberliegend ausgeführt werden.
Eine weitere Ausführungsform des Verfahrens besteht darin, dass die Führungsbauteile oder Baueinheiten in einem nachfolgenden Arbeitsschritt mit Verbindungsbauteilen untereinander verbunden werden, sodass ein dimensionsstabiler Wickel entsteht.

Weitere Ausgestaltungsformen des Verfahrens können darin bestehen, dass einzelne Fixierungsbauteile in bestimmte Positionen des Führungsbauteils bewegt und in der jeweiligen Position fixiert werden. Ebenso kann unter Einsatz von Lehren eine bestimmte Position der Fixierungsbauteile sichergestellt werden. Schließlich kann durch Distanzstücke oder entsprechend ausgeführte Fixierungsbauteile ein fester Abstand der Fixierungsbauteile zueinander eingestellt werden.

Das Fixierungssystem findet Verwendung zur Fixierung von Leitungen.
Es findet insbesondere Verwendung zur Fixierung von Leitungen in bestimmten Abständen zueinander, wobei es sich um eine einzelne durchgehende Leitung oder auch um mehrere beabstandet zueinander laufende Leitungen handeln kann, wie dies bei spiralförmigen oder zylinderförmigen Wickeln der Fall ist.
Die Erfindung findet insbesondere Verwendung bei Wickeln für Wärmetauscher.

Die Erfindung wird nachstehend anhand einiger Ausführungsbeispiele und Zeichnungen näher erläutert. Es zeigen:

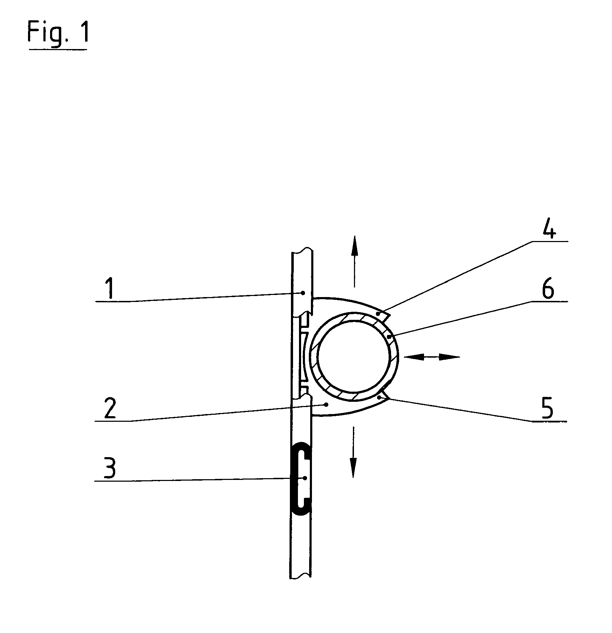

- Fig. 1 -: eine Baueinheit, bestehend aus einem Fixierungsbauteil und einem Führungsbauteil.

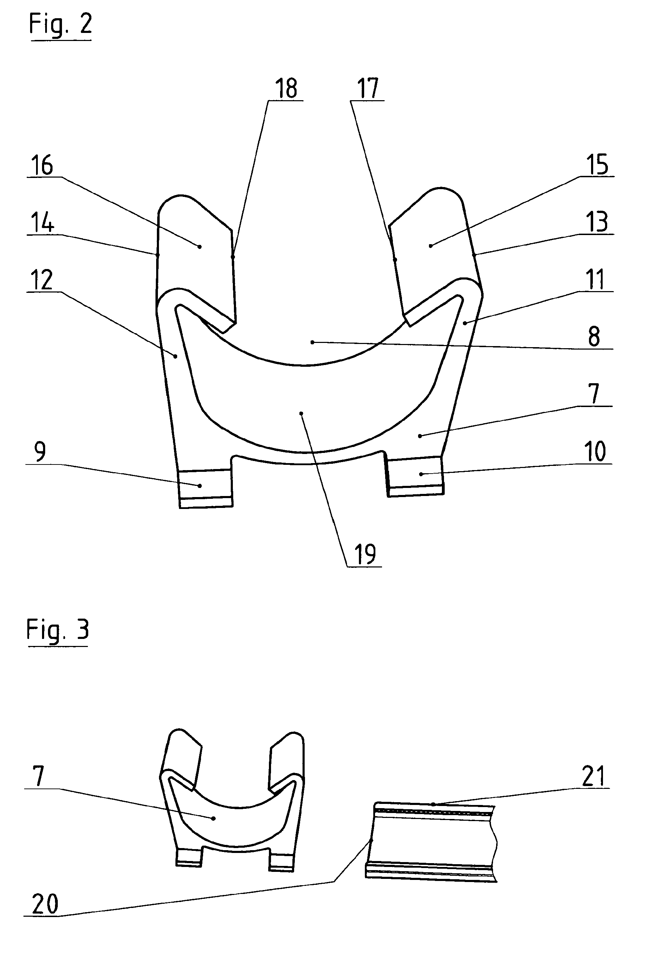

- Fig. 2-: eine Ausführungsform eines Fixierungsbauteils.
- Fig. 3-: eine Anordnung des Fixierungsbauteils aus Fig. 2 neben einem Führungsbauteil.
- Fig. 4-: eine Darstellung der Fixierung eines Wellrohres.
- Fig. 5-: eine Darstellung einer Fixierung mit Rücken an Rücken angeordneten Führungsbauteilen zur Fixierung eines doppelten Wickels.

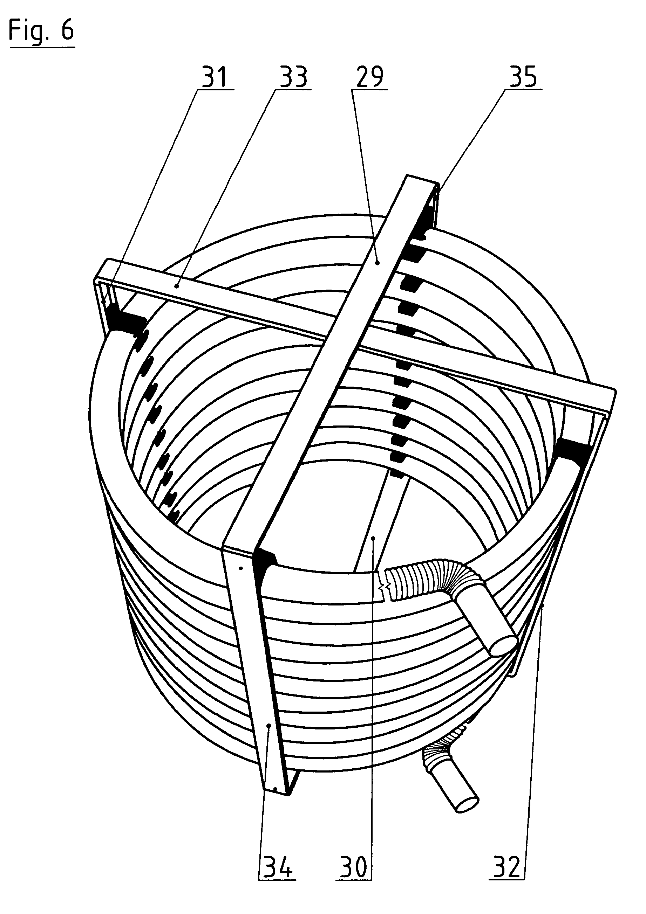

- Fig. 6-: eine Anordnung mit einander gegenüberliegenden und rechtwinklig zueinander angeordneten Fixierungen, die jeweils miteinander verbunden sind und einen zylinderförmigen Wickel insgesamt fixieren.

Ein Führungsbauteil **1** mit einem c-förmigen Querschnittsprofil nimmt ein Fixierungsbauteil **2**, das als einseitig offene Klammer ausgebildet ist, im Querschnitt **3** des C-Profils auf und führt dasselbe darin. Zwischen den verformbaren Armen **4** und **5** nimmt das Fixierungsbauteil **2** ein Rohr **6**, hier ein Glattrohr, auf. Das Fixierungsbauteil **2** ist in Längsrichtung im Führungsbauteil **1** verschiebbar. Das Führungsbauteil **1** ist vorzugsweise als Metallprofil ausgeführt, es kann aber auch als eine Nut in einem Basisbauteil, beispielsweise in einer Behälterwand, ausgeführt sein.

Eine Ausführungsform des Fixierungsbautells besteht in einem Formteil **7,** das in etwa u-förmig ausgebildet ist und mittig eine Ausnehmung **8** zur Aufnahme von Rohren hat.
Im Bereich der Aufstandsfläche sind überstehend Laschen **9** und **10** beidseitig des Fixierungsbauteils vorhanden, mit denen das Fixierungsbauteil **7** in der Nut eines
Führungsbauteils geführt ist.
Die u-förmige Ausnehmung **8** wird durch seitliche Schenkel **11** und **12** gebildet, an deren vorderen Enden **13** und **14** jeweils nach innen ragende Laschen **15** und **16** angeformt sind. Diese beschreiben mit ihren Vorderkanten **17** und **18** sowie mit der Basis **19** der Ausnehmung **8** eine Kreisform oder falls notwendig eine beliebige andere, von einer Kreisform abweichende Konturlinie. Durch diese Gestaltung ist es möglich, Rohre und insbesondere Wellrohre leicht in die Ausnehmung **8** hinein zu drücken, wobei eine Art Einschnappvorgang abläuft. Dabei werden zunächst die Schenkel **11** und **12** und die Laschen **15** und **16** deformiert, wobei nach dem Überwinden des größten Durchmessers des Rohres ein Rückstellen aller Teile des Fixierungsbauteils in ihre spannungsfreie oder jedenfalls spannungsarme Ausgangsposition erfolgt oder angestrebt ist. Auf diese Weise wird durch Form- und/oder Kraftschluss ein Rohr im Fixierungsbauteil **7** gehalten.

Ein Fixierungsbauteil **7** wird von der Stirnseite **20** eines Führungsbauteils **21** in dessen Querschnitt eingeschoben und kann im Führungsbauteil **21** verschoben werden.

Es ist möglich, in einem Führungsbauteil **21** Fixierungsbautelle **7** einzuschieben und so anzuordnen, dass sie mit den Außenseiten **22** ihrer Schenkel aneinander liegen. Der Spalt **24** nebeneinanderliegender Leitungen **23** wird somit nur durch die Abmessungen der Schenkel der Fixierungsbauteile **7** bestimmt und entspricht der doppelten Dicke der Schenkel.

Der Spalt **24** kann durch Einschieben von nicht dargestellten Distanzstücken zwischen zwei Fixierungsbauteilen **2** oder **7** vergrößert werden. Ebenso lässt er sich durch materialeinheitliche Ausformungen an den Fixierungsbauteilen **2** oder **7** bestimmen.

Eine weitere nicht dargestellte Möglichkeit zur Bestimmung des Spaltes **24** kann auch darin bestehen, dass zwischen Führungsbauteil **1**, **21** und Fixierungsbauteil **2**, **7** formkompatible Elemente zusätzlich angeordnet sind, die bei Erreichen bestimmter Positionen im Führungsbauteil einrasten und damit die Bestimmung einer festen Position möglich ist.

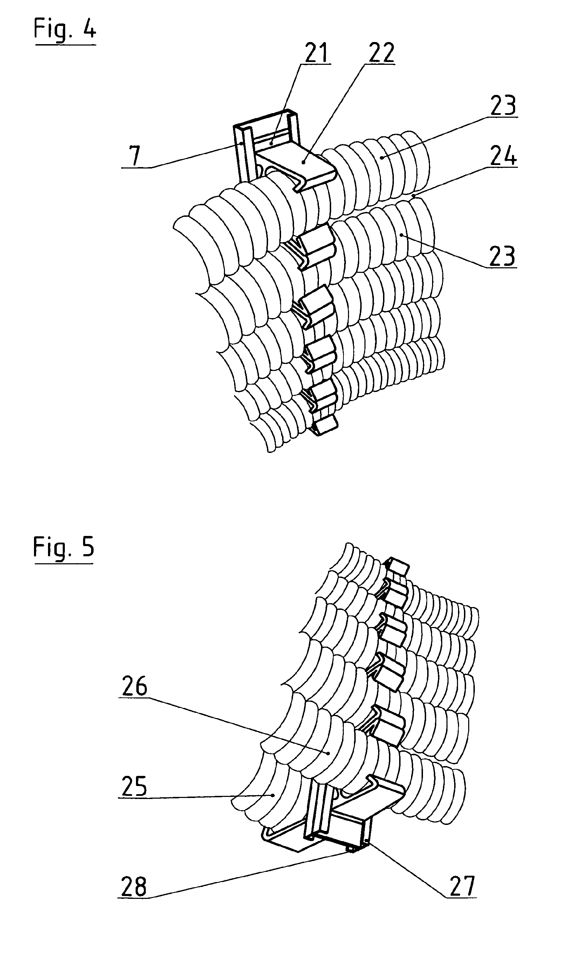

Eine Ausführungsform der in Fig. 4 gezeigten Anordnung benutzt Führungsbauteile **21** so, dass diese Rücken an Rücken montiert und aneinander befestigt werden. Dadurch ist es möglich, eine erste **25** und eine zweite Leitung **26** mit der entstehenden Baueinheit aus Führungsbauteilen **21** und Fixierungsbauteilen **2** oder **7** zu fixieren.

Die oben beschriebene Anordnung kann auch so eingesetzt werden, dass ein erstes Führungsbauteil **27** gegenüberliegend ein zweites Führungsbauteil **28** angeordnet erhält und beide mit einem oberen **29** und einem unteren Verbindungsbauteil **30** verbunden sind. Ein drittes Führungsbauteil **31** ist rechtwinklig oder in einem beliebigen anderen Winkel zum ersten Führungsbauteil **27** und diesem gegenüberliegend ein viertes Führungsbauteil **32** angeordnet, wobei diese wieder mit einem oberen **33** und einem nicht dargestellten unteren Verbindungsbauteil verbunden sind.
Die oberen Verbindungsbauteile **29** und **33** und die unteren Verbindungsbauteile können miteinander verbunden sein.

Die Herstellung der Fixierung erfolgt zunächst auf die Weise, dass ein vorbereitetes Führungsbauteil **1, 21, 27, 28, 31, 32** mit Fixierungsbauteilen **2, 7** bestückt wird und in einem nachfolgenden Arbeitsgang in die Fixierungsbauteile 2, 7 Leitungen **23, 25, 26** eingedrückt werden. Beim Eindrücken der Leitungen werden die Fixierungsbautelle **2, 7** deformiert und versuchen am Ende des Eindrückvorganges durch Rückstellen die dabei entstandenen Spannungen wieder abzubauen. Eventuell verbleibende Restspannungen dienen dabei ebenso wie ein entstehender Formschluss der Fixierung der Leitungen.
Eine Ausgestaltung des Verfahrens kann darin bestehen, dass eine Leitung bogenförmig verlegt und in Fixierungsbauteilen **2, 7**, die sich im gleichen Führungsbauteil befinden, wieder fixiert wird. Auf diese Weise kann ein spiralförmiger oder ein zylinderförmiger Wickel mit einer oder mehreren nebeneinander verlaufenden Leitungen fixiert werden.

Eine Ausgestaltungsform des Verfahrens kann darin bestehen, dass in einem vorgelagerten Arbeitsschritt Führungsbauteile **1, 21** Rücken an Rücken montiert werden und nach der Montage bzw. Fixierung einer ersten Leitung in einem nachfolgenden Arbeitsschritt auf der anderen Seite eine wenigstens eine weitere Leitung fixiert wird. Die Führungsbauteile liegen dabei nach Abschluss des Verfahrens zwischen den Leitungen.

Eine weitere Ausgestaltungsform des Verfahrens besteht darin, dass insbesondere spiral- oder zylinderförmige Wickel von Leitungen fixiert werden, indem ein erstes **27** und ein zweites Führungsbauteil **28,** die jeweils mit Fixierungsbauteilen **2, 7** bestückt sind, einander gegenüberliegend angeordnet werden und nach dem Fixieren der Leitung in einem weiteren Arbeitsgang mit einem oberen **29** und einem unteren Verbindungsbauteil **30** miteinander verbunden werden.

Eine weitere Ausgestaltungsform des Verfahrens kann darin bestehen, dass in einem beliebigen Winkel zu den Führungsbauteilen **31, 32** weitere Führungsbauteile **34, 35** angeordnet sind, die jeweils mit Fixierungsbauteilen **2, 7** bestückt sind. Auch diese können in nachfolgenden Arbeitsschritten mit Verbindungsbauteilen untereinander verbunden werden, wobei die Führungsbauteile **31** und **32** mit einem oberen **33** und einem unteren Verbindungsbauteil, die Führungsbauteile **34** und 35 ebenfalls mit einem oberen 29 und einem unteren Verbindungsbauteil 30 verbunden sind.
Ebenso kann eine Verbindung zwischen benachbarten Verbindungsbauteilen erzeugt werden.

Die oben beschriebenen Fixierungen und die Verfahren zu deren Herstellung werden zur Fixierung von Leitungen eingesetzt, deren Lage nach erfolgter Installation (Fixierung) nicht exakt vorherbestimmbar ist oder deren Lage sich aufgrund mechanischer und/oder thermischer Einflüsse ändern kann.
So finden die Fixierungen insbesondere Verwendung zur Fixierung von Leitungen in bestimmten Abständen zueinander, wobei es sich um einzelne durchgehende Leitungen oder um eine Mehrzahl beabstandet zueinander laufende Leitungen handeln kann. Dies ist insbesondere der Fall, wenn spiralförmige oder zylinderförmige Wickel mit den Leitungen erzeugt werden.

Eine bevorzugte Form der Verwendung ist deshalb der Einsatz der Fixierung bei Wickeln für Wärmetauscher.

Die Erfindung hat also den Vorteil, dass leicht und einfach und unter Verwendung weniger zusätzlicher Bauteile eine Fixierung von Leitungen erfolgen kann, die insbesondere den bei Wärmetauschern vorhandenen Einsatzbedingungen entspricht.

### Bezugszeichenliste

- 1: Führungsbauteil
- 2: Flxierungsbauteil
- 3: Querschnitt
- 4: Verformbare Arme
- 5: Verformbare Arme
- 6: Rohr
- 7: Fixierungsbauteil
- 8: U-förmige Ausnehmung
- 9: Lasche
- 10: Lasche
- 11: Schenkel
- 12: Schenkel
- 13: Vorderes Ende
- 14: Vorderes Ende
- 15: Lasche
- 16: Lasche
- 17: Vorderkante
- 18: Vorderkante
- 19: Basis
- 20: Stirnseite des Führungsbauteils [21]
- 21: Führungsbauteil
- 22: Außenseiten d. Schenkel
- 23: Leitung
- 24: Spalt
- 25: Leitung
- 26: Leitung
- 27: Führungsbauteil
- 28: Führungsbauteil
- 29: Oberes Verbindungsteil
- 30: Unteres Verbindungsteil
- 31: Führungsbauteil
- 32: Führungsbauteil
- 33: Oberes Verbindungsteil
- 34: Führungsbauteil
- 35: Führungsbauteil

## Patentansprüche

1. Fixierungssystem für Leitungen, wenigstens bestehend aus
einer Leitung und einer Halteeinrichtung,
diese bestehend aus
einem Führungsbauteil (1, 21, 31, 32, 34, 35) und einem Fixierungsbauteil (2, 7),
wobei
das Führungsbauteil (1, 21, 31, 32, 34, 35) das Fixierungsbauteil (2, 7) formschlüssig führt und das Fixierungsbauteil (2, 7) die Leitung (23, 25, 26) formschlüssig führt.

2. Fixierungssystem für Leitungen nach Anspruch 1,
**dadurch gekennzeichnet, dass**
die Leitung (23, 25, 26) ein eigenstabiles Glattrohr und/oder ein eigenstabiles Wellrohr und/oder ein flexibler Schlauch und/oder ein flexibles Wellrohr und/oder ein Kabel ist.

3. Fixierungssystem für Leitungen nach einem der Ansprüche 1 oder 2,
**dadurch gekennzeichnet, dass**
die Leitung (23, 25, 26) eine Einzelleitung, eine Mehrzahl von Leitungen, ein spiralförmig und/oder ein zylinderförmig verlaufender Wickel und/oder ein Mehrfachwickel und/oder eine Kombination der vorgenannten Bauformen ist.

4. Fixierungssystem für Leitungen nach einem der Ansprüche 1 bis 3,
**dadurch gekennzeichnet, dass**
das Führungsbauteil (1, 21, 31, 32, 34, 35) eine profilierte Schiene und/oder eine Ausformung aus einem Basisbauteil und/oder ein profilierter Stab und/oder eine formhinterschneidende Nut in einem Basisbauteil ist.

5. Fixierungssystem für Leitungen nach einem der Ansprüche 1 bis 4,
**dadurch gekennzeichnet, dass**
das Führungsbauteil (1, 21, 31, 32, 34, 35) Mittel
zum Befestigen und/oder zum Aufhängen an nicht zum Fixierungssystem gehörenden Teilen
und/oder zum Befestigen weiterer Führungsbauteile (1, 21, 31, 32, 34,
35)
hat.

6. Fixierungssystem für Leitungen nach einem der Ansprüche 1 bis 5,
**dadurch gekennzeichnet, dass**
das Fixierungsbauteil
eine Schelle ist, die die Leitung (23, 25, 26) umschließt und im Führungsbauteil (1, 21, 31, 32, 34, 35) verschiebbar und/oder in vorgegebenen Positionen fixierbar ist
und/oder ein einseitig offenes Fixierungsbauteil (2, 7) ist, das die Leitung (23, 25, 26) durch Formschluss radial und/oder axial hält und im Führungsbauteil (1, 21, 31, 32, 34, 35) verschiebbar und/oder in vorgegebenen Positionen fixierbar ist.

7. Fixierungssystem für Leitungen nach Anspruch 6,
**dadurch gekennzeichnet, dass**
Führungsbauteil (1, 21, 31, 32, 34, 35) und Fixierungsbauteil (2, 7) zueinander kompatible Elemente haben, durch die das Fixierungsbauteil (2, 7) im Führungsbauteil (1, 21, 31, 32, 34, 35) an einer vorgegebenen Position festgelegt werden kann.

8. Fixierungsverfahren für eine Leitung,
**dadurch gekennzeichnet, dass**
eine Schelle über eine Leitung (23, 25, 26) gelegt wird, wobei die Schelle die Leitung (23, 25, 26) weitgehend umschließt,
anschließend die Einheit aus Leitung (23, 25, 26) und Schelle mit den Laschen (9, 10, 15, 16) oder anderen formkompatiblen Elementen mit dem Führungsbauteil (1, 21, 31, 32, 34, 35) verbunden
und nachfolgend durch Verschieben längs des Führungsbauteils (1, 21, 31, 32, 34, 35) in eine Sollposition gebracht wird.

9. Fixierungsverfahren für eine Leitung,
**dadurch gekennzeichnet, dass**
ein Fixierungsbauteil (2, 7) mit den Laschen (9, 10, 15, 16) oder anderen formkompatiblen Elementen mit dem Führungsbauteil (1, 21, 31, 32, 34, 35) verbunden wird,
das Fixierungsbauteil (2, 7) durch Verschieben längs des Führungsbauteils (1, 21, 31, 32, 34, 35) in eine Sollposition gebracht wird,
eine Leitung (23, 25, 26) durch Eindrücken in das Fixierungsbauteil (2, 7) mit derselben verbunden wird.

10. Fixierungsverfahren für eine Leitung nach einem der Ansprüche 8 oder
9,
**dadurch gekennzeichnet, dass**
in einem zusätzlichen Arbeitsschritt
die Sollposition der Schelle oder des Fixierungsbauteils (2, 7)
durch Festlegen mit formkompatiblen Elementen zwischen Schelle oder Fixierungsbauteil (2, 7) und Führungsbauteil (1, 21, 31, 32, 34, 35)
oder mit Zwischenstücken
oder durch die Geometrie der Fixierungsbauteile (2, 7) oder Schellen einstellbar ist.

11. Fixierung einer Leitung nach einem der Ansprüche 1 bis 10,
**dadurch gekennzeichnet, dass**
die Leitung Teil eines Leitungsabschnittes und/oder eines Leitungsbündels und/oder eines Leitungswickels eines Wärmetauschers ist.
